# EUROPEAN PATENT APPLICATION

(11) **EP 4 794 326 A1**
(43) Date of publication of application: **19.08.2026**
(21) Application number: 24879908.2
(22) Date of filing: 07.08.2024
(51) Int. Cl.: H04N 13/156, H04N 13/178, H04N 13/239, H04N 13/271, H04N 13/246, H04N 13/128, H04N 13/332, G06T 5/50, G06T 3/18, G06T 5/60

(54) **HEAD-MOUNTED DISPLAY DEVICE FOR PROCESSING IMAGES OBTAINED FROM DIFFERENT TYPES OF CAMERAS AND OPERATING METHOD THEREOF**

(30) Priority: 18.10.2023 KR 20230139896; 19.12.2023 KR 20230186298
(71) Applicant: Samsung Electronics Co., Ltd., Suwon-si, Gyeonggi-do 16677 (KR)
(72) Inventor: KIM, Songhyeon, Suwon-si, Gyeonggi-do 16677 (KR); YEO, Yoonjae, Suwon-si, Gyeonggi-do 16677 (KR); JI, Seowon, Suwon-si, Gyeonggi-do 16677 (KR); KIM, Hyokak, Suwon-si, Gyeonggi-do 16677 (KR); WON, Seungjae, Suwon-si, Gyeonggi-do 16677 (KR); JEONG, Jaeyun, Suwon-si, Gyeonggi-do 16677 (KR)
(74) Representative: Appleyard Lees IP LLP
(86) International application number: PCT/KR2024/011724
(87) International publication number: WO 2025/084568

(57) **Abstract**

Provided is a head-mounted display (HMD) device providing immersiveness to the user by performing image processing to extend fields of views (FOVs) of images obtained by different types of cameras having different FOVs. The HMD device may obtain a plurality of images having different FOVs from an external device, based on a first image with a relatively wide FOV among the plurality of images, extend an FOV of a second image, generate a spatial image including depth information by using the first image and the second image with the extended FOV, and display a spatial video comprised of a plurality of spatial images.

## Description

### Technical Field

The present disclosure relates to a head-mounted display (HMD) device for processing images obtained by using different types of cameras, and an operating method thereof. More particularly, the present disclosure provides an HMD device for performing image processing to extend fields of view (FOVs) of images obtained from a plurality of cameras having different FOVs.

### Background Art

A head-mounted display (HMD) device is a device for providing user experiences of augmented reality (AR) or mixed reality (MR). The AR or MR is a technology for showing a virtual object overlaid on a physical environmental space in real world or on a real world object (or real object), which may provide a virtual object and virtual information by combining them with real space. Among HMD devices, a see-through HMD device may allow the user to see the real world and enhance user experience by augmenting a virtual object on the real world. The see-through HMD device may be classified into an optical see-through HMD device and a video see-through HMD device.

The video see-through HMD device may include at least one camera disposed at the front, capture a scene of the real world by using the at least one front camera, and display the scene through an internal display screen, thereby providing see-through experiences for the user to see both the real world and virtual objects together.

Recently, as HMD devices have become widespread and more available, there is growing demand for users to watch content (e.g., video content) captured by the user him/herself through the HMD device. In order to display the content captured by the user him/herself through the HMD device, it is necessary to estimate depth information of an object in the content and generate a spatial image (or spatial video). The depth information estimated from the content may be limitedly obtained only for a common area captured through stereo cameras. In a case that the stereo cameras correspond to an HMD device comprised of different types of multiple cameras, the depth information may be obtained only for a common area between fields of view (FOVs) of images (or videos) captured with the multiple cameras.

### Disclosure of Invention

### Technical Solution

An aspect of the present disclosure provides a head-mounted display (HMD) device for processing images obtained from different types of cameras. In an embodiment of the present disclosure, the HMD device may include memory storing at least one instruction, at least one processor for executing the at least one instruction, and a display. The at least one processor may obtain a plurality of images having different fields of view (FOVs) captured by a plurality of cameras of different types. The at least one processor may extend, based on a display area of a first image having a first FOV among the plurality of images, an FoV of a second image by extending a display area of the second image having a second FOV smaller than the first FOV. The at least one processor may generate a spatial image including depth information by using the first image and the second image with the extended FOV. The at least one processor may display the spatial image through the display.

Another aspect of the present disclosure provides an operating method of an HMD device. In an embodiment of the present disclosure, the operating method of the HMD device may include obtaining a plurality of images having different FOVs captured by a plurality of cameras of different types. In an embodiment of the present disclosure, the operating method of the HMD device may include extending, based on a display area of a first image having a first FOV among the plurality of images, an FOV of a second image by extending a display area of the second image having a second FOV smaller than the first FOV. In an embodiment of the present disclosure, the operating method of the HMD device may include generating a spatial image including depth information by using the first image and the second image with the extended FOV. In an embodiment of the present disclosure, the operating method of the HMD device may include displaying the generated spatial image.

Another aspect of the present disclosure provides a mobile device for processing images obtained from different types of cameras. In an embodiment of the present disclosure, the mobile device may include a plurality of cameras configured to obtain images having different FOVs, memory storing at least one instruction, at least one processor for executing the at least one instruction, and a communication interface configured to pair with an external device to transmit and receive data. The at least one processor may obtain a first image through a first camera having a first FOV and a second image through a second camera having a second FOV smaller than the first FOV among the plurality of cameras. The at least one processor may extend the FOV of the second image by extending a display area of the second image based on a display area of the first image. The at least one processor may generate a spatial image including depth information by using the first image and the second image with the extended FOV. The at least one processor may transmit the spatial image to a paired HMD device through the communication interface. The spatial image may be displayed by the HMD device.

### Brief Description of Drawings

The present disclosure may be readily understood by combinations of the following detailed descriptions and the accompanying drawings, and reference numerals refer to structural elements.
FIG. 1 is a conceptual diagram illustrating operations of a head-mounted display (HMD) device for generating a spatial video by processing images obtained from different types of cameras and displaying the spatial video, according to the present disclosure.
FIG. 2 is a flowchart illustrating a method by which an HMD device processes images obtained from different types of cameras, according to an embodiment of the present disclosure.
FIG. 3 is a block diagram illustrating components of an HMD device, according to an embodiment of the present disclosure.
FIG. 4 illustrates an operation of an HMD device for obtaining images and metadata from different types of cameras, according to an embodiment of the present disclosure.
FIG. 5 illustrates an operation of an HMD device for extending a field of view (FOV) of an image, according to an embodiment of the present disclosure.
FIG. 6 illustrates an operation of an HMD device for extending an FOV of an image, according to an embodiment of the present disclosure.
FIG. 7 illustrates an operation of an HMD device for extending an FOV of an image, according to an embodiment of the present disclosure.
FIG. 8 illustrates an operation of an HMD device for extending an FOV of an image, according to an embodiment of the present disclosure.
FIG. 9 illustrates an operation of an HMD device for generating a spatial image having a depth value by using stereoscopic images, according to an embodiment of the present disclosure.
FIG. 10 is a flowchart illustrating a method by which an HMD device generates a spatial image having a depth value by using stereoscopic images, according to an embodiment of the present disclosure.
FIG. 11 is a flowchart illustrating a method by which an HMD device generates a spatial image having a depth value by using stereoscopic images, according to an embodiment of the present disclosure.
FIG. 12 illustrates operations of an HMD device for extending an FOV of an image and generating a spatial image by using images having extended FOVs, according to an embodiment of the present disclosure.
FIG. 13 is a block diagram illustrating components of a mobile device, according to an embodiment of the disclosure.
FIG. 14 is a flowchart illustrating operations of a mobile device and an HMD device, according to an embodiment of the present disclosure.

### Mode of the Invention

The terms are selected from among common terms widely used at present, taking into account principles of the present disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the present disclosure. Therefore, the terms should be defined based on their meanings and descriptions throughout the present disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

In the disclosure, the expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. For example, in some situations, an expression "a system configured to do something" may refer to "an entity able to do something in cooperation with" another device or parts. For example, "a processor configured to perform A, B and C functions" may refer to a dedicated processor, e.g., an embedded processor for performing A, B and C functions, or a generic-purpose processor, e.g., a Central Processing Unit (CPU) or an application processor that may perform A, B and C functions by executing one or more software programs stored in a memory.

When the term "connected" or "coupled" is used, a component may be directly connected or coupled to another component. However, unless otherwise defined, it is also understood that the component may be indirectly connected or coupled to the other component via another new component.

In the present disclosure, augmented reality (AR) refers to showing a virtual image or both real objects and virtual images in a physical environment space in real word.

In the present disclosure, head-mounted display (HMD) device refers to a device to be worn on the head of the user for providing AR experiences for the user. In an embodiment of the present disclosure, the HMD device may include, for example, an AR helmet, a face-mounted display (FMD) device to be worn on the face of the user or AR glasses in the form of eye glasses.

In the disclosure, a see-through HMD device is an HMD device for allowing the user to see real world, augmenting and displaying virtual objects in the real world. The see-through HMD device may be classified into an optical see-through HMD device and a video see-through HMD device.

In the disclosure, the optical see-through HMD device is a device for providing an AR experience of being able to see the real world and virtual objects together by projecting a virtual image onto an image combiner (e.g., a waveguide) by using a projector.

In the disclosure, the video see-through HMD device is a device for providing an AR experience for the user to see the real world and virtual objects together by capturing a real scene with at least one camera disposed on the front of the device and displaying the scene through a display screen.

In the present disclosure, a field of view (FoV) is an optical technology term that expresses the size of an area captured with a camera and displayed in an image as an angle.

In the present disclosure, the wide-angle camera refers to a camera including a wide-angle lens having a focal length smaller than a focal length of a normal lens (e.g., 40 mm to 60 mm). The focal length of the wide-angle lens included in the wide-angle camera may be, for example, 26 mm to 35 mm. However, it is not limited thereto. The wide-angle camera may have a wide FOV as compared to a camera including a standard lens having a normal focal length, and thus, capture and display a scene of a wide area in an image. The FoV of the wide-angle camera may be, for example, 90°, without being limited thereto.

In the present disclosure, the ultra-wide-angle camera refers to a camera including an ultra-wide-angle lens having a focal length shorter than the wide-angle lens included in the wide-angle camera. The focal length of the ultra-wide-angle lens included in the ultra-wide-angle camera may be, for example, 26 mm or less. The ultra wide-angle camera may have a wider FOV than the wide-angle camera, and thus, capture and display a scene of a wide area as compared to the wide-angle camera in an image. The FoV of the ultra-wide-angle camera may be, e.g., 100° or more, without being limited thereto.

In the present disclosure, a telephoto camera is a camera including a long focal lens whose physical length is shorter than its focal length. The telephoto camera may include a combination of lenses called a telephoto group that extends light paths to form a long focal lens with a short focal length. The FoV of the telephoto camera may range from, e.g., 10° to 30°, and the focal length may have a value in a range of e.g., 67 mm to 206 mm. An ultra telephoto camera including an ultra-telephoto lens may have an FOV of e.g., 1° to 8° and a focal length of 300 mm or more.

An embodiment of the present disclosure will now be described in detail with reference to accompanying drawings so as to be readily practiced by those of ordinary skill in the art. However, the embodiments of the disclosure may be implemented in many different forms, and not limited thereto as will be discussed herein.

Embodiments of the disclosure will now be described in detail with reference to accompanying drawings.

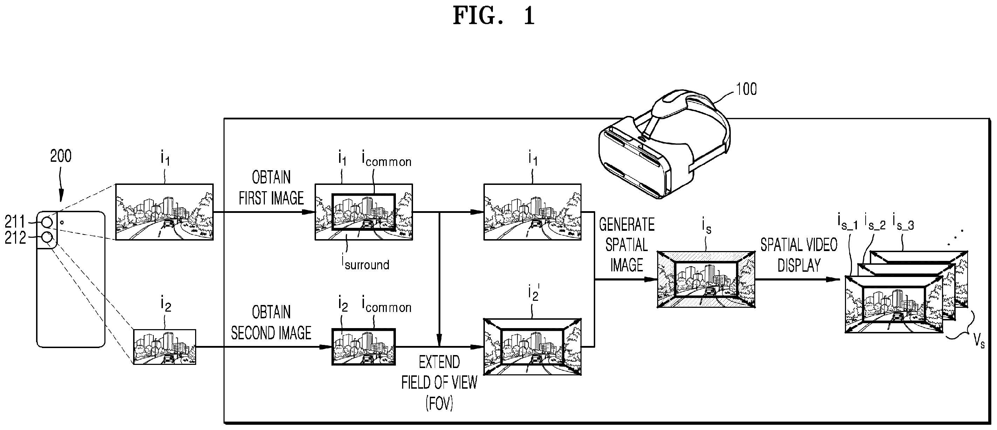

FIG. 1 is a conceptual diagram illustrating operations of an HMD device 100 for generating a spatial video vₛ by processing images i₁ and i₂ obtained from different types of cameras 211 and 212 and displaying the spatial video vₛ, according to the present disclosure.

The HMD device 100 is a device for expressing AR that shows a virtual image in a physical environment space of real world or shows real objects and virtual images together. In the embodiment shown in FIG. 1, the HMD device 100 may be implemented as a device to be worn on the user's head. It is not, however, limited thereto, and the HMD device 100 may include, for example, an AR helmet, a face-mounted display (FMD) device to be worn on the face of the user or AR glasses in the form of eye glasses.

Referring to FIG. 1, the HMD device 100 may obtain a plurality of images i₁ and i₂ having different FoVs from a plurality of cameras 211 and 22 of different types included in a mobile device 200, extend an FoV of the second image i₂, the FoV being smaller than the first image i₁, generate a spatial image iₛ having depth information by using the first image i₁ and a second image i₂' with the extended FoV, and display a spatial video vₛ by displaying, with the passage of time, a plurality of spatial images i_{s_1}, i_{s_2}, i_{s_3}, ... obtained successively.

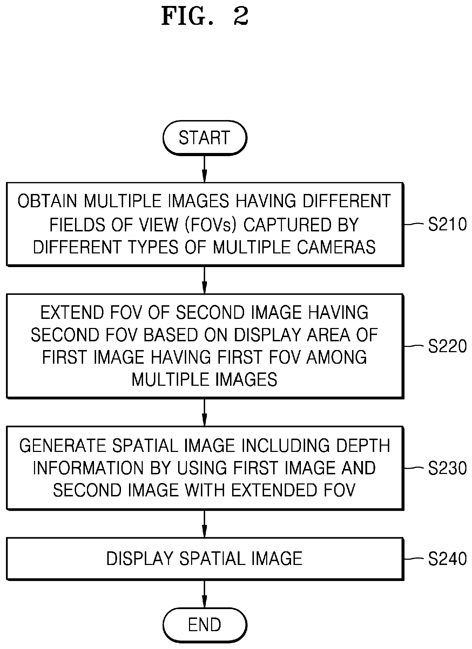

Functions and/or operations of the HMD device 100 according to the embodiment shown in FIG. 1 will now be described in detail with reference to FIGS. 1 and 2.

FIG. 2 is a flowchart illustrating a method by which the HMD device 100 processes images obtained from different types of cameras, according to an embodiment of the present disclosure.

In operation S210, the HMD device 100 obtains a plurality of images having different FoVs captured by a plurality of cameras of different types. In an embodiment of the present disclosure, the HMD device 100 may obtain, from an external device, a plurality of images captured by a plurality of cameras of different types including lenses having different focal lengths. The plurality of images may have different FoVs. Also referring to the embodiment of FIG. 1, the HMD device 100 may be connected to the mobile device 200 over a network, and may receive the first image i₁ and the second image i₂ captured by the first camera 211 and the second camera 212, respectively, included in the mobile device 200. In an embodiment of the present disclosure, the HMD device 100 may be connected to the mobile device 200 over a short-range communication network and perform data transmission and reception. For example, the HMD device 100 may be paired with the mobile device 200 over a short-range wireless communication network such as Bluetooth, Bluetooth low energy (BLE) or Wi-Fi direct, and receive the images i₁ and i₂ from the mobile device 200.

The first camera 211 and the second camera 212 included in the mobile device 200 may be of different types. For example, the first camera 211 may be an ultra-wide-angle camera including an ultra-wide-angle lens, and the second camera 212 may be a wide-angle camera including a wide-angle lens. In the present disclosure, the wide-angle camera refers to a camera including a wide-angle lens having a focal length smaller than a focal length (e.g., 40 mm to 60 mm) of a normal lens. The focal length of the wide-angle lens included in the wide-angle camera may be, for example, 26 mm to 35 mm. However, it is not limited thereto. In the present disclosure, the ultra-wide-angle camera refers to a camera including an ultra-wide-angle lens having a focal length shorter than the wide-angle lens included in the wide-angle camera. The focal length of the ultra-wide-angle lens included in the ultra-wide-angle camera may be, for example, 26 mm or less. The ultra wide-angle camera may include, for example, a fish-eye lens.

The ultra wide-angle camera may have a wider FOV than the wide-angle camera, and thus, capture and display a scene of a wide area as compared to the wide-angle camera in an image. In the present disclosure, a field of view (FoV) is an optical term that expresses the size of an area captured with a camera and displayed in an image as an angle. In an embodiment of the present disclosure, the HMD device 100 may obtain information about respective FoVs of the images i₁ and i₂ received from the mobile device 200 through respective metadata of the images i₁ and i₂.

Referring to the embodiment shown in FIG. 1, the first image i₁ captured by the first camera 211, the ultra-wide-angle camera may have a relatively wide FoV, displaying a wide area as compared to the second image i₂ captured by the second camera 212, the wide-angle camera. Specifically, the first image i₁ may include not only a common area i_{common} obtained by capturing an area shared by the FoVs of the first camera 211 and the second camera 212 but also a surrounding area i_{surround} enclosing the common area i_{common}. The surrounding area i_{surround} may not be included in the second image i₂ captured by the second camera 212 including a wide-angle lens having a relatively narrow FoV as compared to the first camera 211.

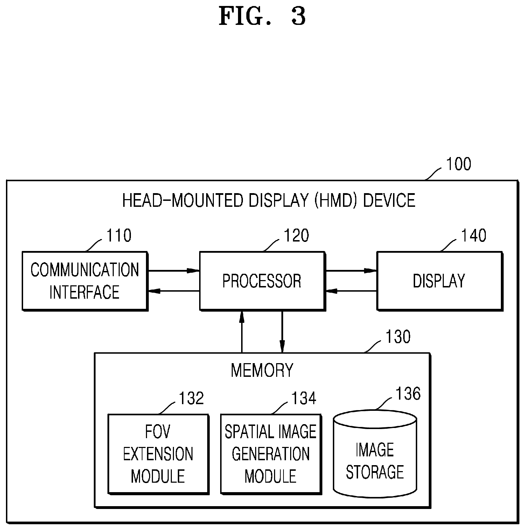

Although the HMD device 100 is shown in FIG. 1 as receiving the images i₁ and i₂ from the mobile device 200, the present disclosure is not limited thereto. In an embodiment of the present disclosure, the images i₁ and i₂ may be stored in advance in memory 130 (see FIG. 3) of the HMD device 100.

The present disclosure is not, however, limited to the aforementioned embodiment. In an embodiment of the present disclosure, the HMD device 100 may include a first camera and a second camera of different types having different FoVs. For example, the first camera may be an ultra-wide-angle camera including an ultra-wide-angle lens, and the second camera may be a wide-angle camera including a wide-angle lens. In another example, the second camera may be a telephoto camera including a telephoto lens. In this case, the HMD device 100 may use the first camera included therein to obtain the first image i₁ and use the second camera to obtain the second image i₂.

Referring to FIG. 2 again, in operation S220, the HMD device 100 extends the second FoV of the second image based on a display area of the first image having the first FoV among the plurality of images. Also referring to FIG. 1, based on the display area of the first image i₁ having the first FoV which is relatively wider, the HMD device 100 may extend the FOV of the second image i₂ by extending the display area of the second image i₂ having the second FoV narrower than the first FOV.

In an embodiment of the present disclosure, the HMD device 100 may extend the display area of the second image i₂ by merging, with the second image i_{2,} the surrounding area i_{surround} of the display area of the first image i₁ excluding the common area i_{common} shared by the second image i₂.

In an embodiment of the present disclosure, the HMD device 100 may extend the display area of the second image i₂ by performing image stitching that combines, with the second image i_{2,} the surrounding area i_{surround} of the display area of the first image i₁ excluding the common area i_{common}. In an embodiment of the present disclosure, the HMD device 100 may extend the display area of the second image i₂ by performing image warping for the first image i₁ and the second image i₂ based on camera parameters including at least one of the respective focal lengths of the first camera 211 and the second camera 212, a principal point and an image sensor format and calibration data about rotation and translation between the first camera 211 and the second camera 212, and stitching the warped images.

In an embodiment of the present disclosure, the HMD device 100 may extend the display area of the second image i₂ by inputting the second image i₂ to an artificial intelligence (AI) model and performing outpainting that uses the first image i₁ as a guide image.

In an embodiment of the present disclosure, the HMD device 100 may obtain a merged image by merging, with the second image i_{2,} the surrounding image i_{surround} of the display area of the first image i₁ excluding the common area i_{common} shared by the second image i₂, and extend the display area of the second image i₂ by adjusting pixel value differences of pixels corresponding to a boundary between the surrounding area i_{surround} and the second image i₂ in the merged image by using an image harmonization algorithm.

Through at least one of the aforementioned methods, the HMD device 100 may obtain the second image i₂' with the extended FoV. In an embodiment of the present disclosure, the HMD device 100 may apply one of the aforementioned methods depending on the computation speed of a processor 120 (see FIG. 3) in the HMD device, system demanding speed, etc.

Although the HMD device 100 is shown and described in FIGS. 1 and 2 as extending a relatively narrow FOV of an image (e.g., the second image i₂) based on the two images i₁ and i₂, the present disclosure is not limited thereto. In all the following embodiments of the present disclosure, the HMD device 100 may extend a narrow FoV of an image by using three or more images.

Referring to FIG. 2 again, in operation S230, the HMD device 100 generates a spatial image including depth information by using the first image and the second image with the extended FoV. In an embodiment of the present disclosure, the HMD device 100 may estimate depth information through stereo visioning that uses a pair of the first image i₁ (see FIG. 1) and the second image i₂' (see FIG. 1) with the extended FoV, and obtain a spatial image including the depth information. Also referring to FIG. 1, the HMD device 100 may shift the second image i₂' with the extended FoV by a disparity with respect to the first image i₁, and obtain the spatial image iₛ including the depth information through stereo visioning with the pair of the first image i₁ and the shifted second image i₂'.

In an embodiment of the present disclosure, the HMD device 100 may predict depth information of an extended area of the entire display area of the second image i₂' with the extended FoV excluding the common area i_{common} through mono image-based depth estimation, and obtain depth information of the entire area of the second image i₂' with the extended FoV by transforming the predicted depth information of the extended area based on depth information predicted from the common area i_{common}. The HMD device 100 may obtain the spatial image iₛ based on the depth information of the first image i₁ and the depth information of the second image i₂' with the extended FoV.

The HMD device 100 may obtain the spatial image iₛ from a pair of the first image i₁ and the second image i₂' with the extended FoV by using, for example, the Off-Axis depth estimation algorithm that uses the Off-Axis aperture or a depth estimation algorithm that uses point cloud.

In an embodiment of the present disclosure, the HMD device 100 may include a depth sensor for obtaining depth information by measuring depth values of objects in real world. The depth sensor may include, for example, a time-of-flight (ToF) sensor or a light wave detection and ranging (LiDAR) sensor, without being limited thereto. In this case, the HMD device 100 may obtain depth information by measuring a depth value of a real object by using the depth sensor, and obtain the spatial image iₛ by combining the obtained depth information with the first image i₁ and the second image i₂' with the extended FoV.

Through at least one of the aforementioned methods, the HMD device 100 may generate the spatial image iₛ. In an embodiment of the present disclosure, the HMD device 100 may apply one of the aforementioned methods depending on the computation speed of a processor 120 (see FIG. 3) in the HMD device, system demanding speed, etc.

Referring to FIG. 2 again, in operation S240, the HMD device 100 displays the spatial image. Also referring to FIG. 1, the HMD 100 may display a spatial video vₛ comprised of a plurality of spatial images i_{s_1}, i_{s_2}, i_{s_3}, ... successively obtained over time.

As the HMD device 100 is widespread and available, there are growing demands of users to watch content (e.g., video content) captured by the user him/herself through the HMD device 100. In order to display the content captured by the user him/herself through the HMD device 100, it is necessary to estimate depth information of an object in the content and generate a spatial image (or spatial video). In a case of capturing an image (or video) by using a device including a plurality of cameras 211 and 212 (see FIG. 1) of different types, such as the mobile device 200 (see FIG. 1), as the plurality of cameras 211 and 212 have different FoVs, depth information may be obtained only for an area shared between the FoVs of the plurality of cameras 211 and 212. Furthermore, the narrow display area of the entire spatial image (or spatial video) and the failure to give the user a sense of depth thereof may hinder immersiveness of the user.

The present disclosure aims at providing the HMD device 100 that provides immersiveness to the user by performing image processing to extend FoVs of the images i₁ and i₂ obtained from the different types of cameras 211 and 212 having different FoVs, and an operating method thereof.

In the embodiments shown in FIGS. 1 and 2, the HMD device 100 may obtain the plurality of images i₁ and i₂ having different FoVs from an external device (e.g., the mobile device 200 (see FIG. 1)), extend the FoV of the second image i₂ based on the first image i₁ having a relatively wide FoV among the plurality of images i₁ and i₂, generate the spatial image iₛ including depth information by using the first image i₁ and a second image i₂' with the extended FoV, and display the spatial video vₛ comprised of a plurality of spatial images i_{s_1}, i_{s_2}, i_{s_3}, .... In an embodiment of the present disclosure, the HMD device 100 provides a technical effect of increasing immersiveness of the user who consumes image content (or video content) captured directly by the user by maximizing an FoV of the image content (or video content).

Furthermore, in an embodiment of the present disclosure, the HMD device 100 may adaptively apply a method having high computation complexity or a method having relatively low computation complexity depending on the device's computation speed or operating environment (e.g., real-time streaming, online, offline, etc.) in extending the FoV of an image and generating the spatial image iₛ, thereby providing a flexible solution for generating spatial video content.

FIG. 3 is a block diagram illustrating components of the HMD device 100, according to an embodiment of the present disclosure.

Referring to FIG. 3, the HMD device 100 may include a communication interface 110, the processor 120, the memory 130 and a display 140. The communication interface 110, the processor 120, the memory 140 and the display 140 may be electrically and/or physically connected to one another. In FIG. 3, only the components for describing an operation of the HMD device 100 are shown, and components included in the HMD device 100 are not limited to those shown in FIG. 3. In an embodiment of the present disclosure, the HMD device 100 may be implemented as a portable device that is mounted on the user's head, and in this case, the HMD device 100 may further include a battery for supplying driving power to the communication interface 110, the processor 120 and the display 140.

The communication interface 110 is a hardware device configured to perform data communication with an external device and/or a server. The communication interface 110 may be configured with a device for performing data communication with an external device or a server by using at least one of data communication schemes including, for example, a cable local area network (LAN), a wireless LAN, Wi-Fi, Wi-Fi direct, Bluetooth, Bluetooth low energy (BLE), infrared data association (IrDA), near field communication (NFC), wireless broadband Internet (Wibro), world interoperability for microwave access (WiMAX), shared wireless access protocol (SWAP), wireless gigabit alliance (WiGig) and radio frequency (RF) communication. The external device may be connected to the HMD device 100 over a communication network, and may be, for example, a mobile device such as a smart phone or a tablet PC.

In an embodiment of the present disclosure, the communication interface 110 may be connected to the mobile device 200 (see FIGS. 1 and 2) and transmit and receive data under the control of the processor 120. The communication interface 110 may be paired with the mobile device 200 over a short-range wireless communication network, e.g., Bluetooth, BLE or Wi-Fi direct, to receive image data from the mobile device 200.

The processor 120 may execute one or more instructions of a program stored in the memory 130. The processor 120 may include hardware components for performing arithmetic, logical, and input/output operations and image processing. The processor 120 is shown as one element in FIG. 3, but is not limited thereto. In an embodiment of the present disclosure, the processor 120 may be configured with one or more elements. The one or more elements that make up the processor 120 may be circuitries such as system on chips (SoCs), integrated circuits (ICs), etc. For example, the processor 120 may be a general-purpose processor such as a central processing unit (CPU), an application processor (AP), a digital signal processor (DSP), etc., a dedicated graphic processor such as a graphic processing unit (GPU), a vision processing unit (VPU), etc., or a dedicated artificial intelligence (AI) processor such as a neural processing unit (NPU).

The processor 120 may include various processing circuits and/or a plurality of processors. For example, the term 'processor' used in the present disclosure including claims may include various processing circuits including at least one processor. One or more of the at least one processor may be individually and/or collectively, in a distributed fashion, configured to perform various functions as described in the present disclosure. As herein used, the processor, at least one processor or one or more processors may be configured to perform various functions. However, these terms cover, without limitation, a situation in which one processor performs some of the functions while other processor(s) perform some other functions, and a situation in which a single processor may perform all the functions. Furthermore, the at least one processor may include a combination of processors that perform the disclosed various functions in a distributed fashion. The at least one processor may execute program instructions to fulfill or perform various functions.

In an embodiment of the present disclosure, the processor 120 may control processing of input data according to a predefined operation rule or an AI model. When the processor 120 is the dedicated AI processor, the dedicated AI processor may be designed in a hardware structure specialized for dealing with a particular AI model.

The memory 130 may include, for example, at least one type of storage media including a flash memory, a hard disk, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), or an optical disk.

The memory 130 may store instructions related to functions and/or operations of the HMD device 100 for displaying a spatial video by performing image processing on the plurality of images having different FoVs. In an embodiment of the disclosure, the memory 130 may store at least one of algorithms, data structures, program codes, application programs, and instructions that are readable by the processor 120. The instructions, algorithms, data structures and program codes stored in the memory 130 may be implemented in e.g., a programming or scripting language such as C, C++, Java, assembler, etc.

The memory 130 may store instructions, algorithms, data structures or program codes regarding an FoV extension module 132 and a spatial image generation module 134. The modules included in the memory 130 may refer to units of processing the functions or operations performed by the processor 120, and may be implemented in software such as instructions, algorithms, data structures or program codes. In an embodiment of the present disclosure, the memory 130 may include an image storage 136 for storing images.

The processor 120 may be implemented by executing the instructions or program codes stored in the memory 130. Functions and/or operations performed when the processor 120 executes the instructions or program codes of each of the modules stored in the memory 130 will now be described in detail.

The processor 120 may receive image data of a plurality of images having different FoVs from an external device (e.g., the mobile device) through the communication interface 110. It is not, however, limited thereto, and the processor 120 may obtain the plurality of images stored in the image storage 136 by loading the memory 130. The plurality of images may be captured by different types of cameras, and may have different display areas due to different FoVs of the cameras. In the present disclosure, a field of view (FoV) is an optical technology term that expresses the size of an area captured with a camera and displayed in an image as an angle. For example, the first image may be obtained by being captured by an ultra-wide-angle camera including an ultra-wide-angle lens, and the second image may be obtained by being captured by a wide-angle camera including a wide-angle lens. It is not, however, limited thereto, and the first image may be obtained by being captured by the wide-angle camera and the second image may be obtained by being captured by a telephoto camera. For example, the first image may be obtained by being captured by an ultra-wide-angle camera, and the second image may be obtained by being captured by a telephoto camera. Specifically, the FoV of the camera for capturing the first image is wider than the FoV for capturing the second image, so the first image may include a relatively wide area as compared to the second image.

The processor 120 may obtain information about the FoV of each of the plurality of images through metadata of the plurality of images.

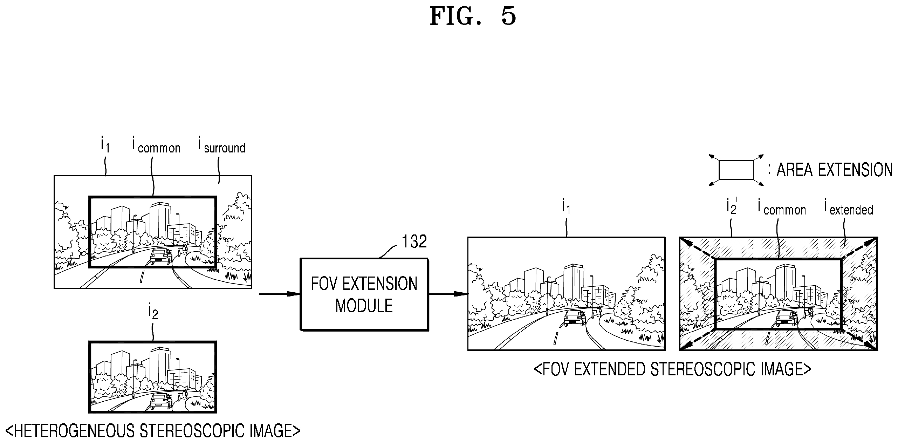

The FoV extension module 132 is configured with instructions or program codes for executing a function and/or operation of extending an FoV by extending a display area of an image having a narrower FoV based on an image having a relatively wide FoV among the images having different FoVs. The processor 120 may extend a narrow FoV of the second image based on the display area of the first image having a relatively wide FoV by executing the instructions or program codes of the FoV extension module 132. In an embodiment of the present disclosure, the processor 120 may extend the display area of the second image by performing image processing to merge, with the second image, the surrounding area of the display area of the first image excluding the common area shared by the second image. A specific embodiment in which the processor 120 extends the FoV of the second image by simply merging images will be described in FIG. 5 in detail.

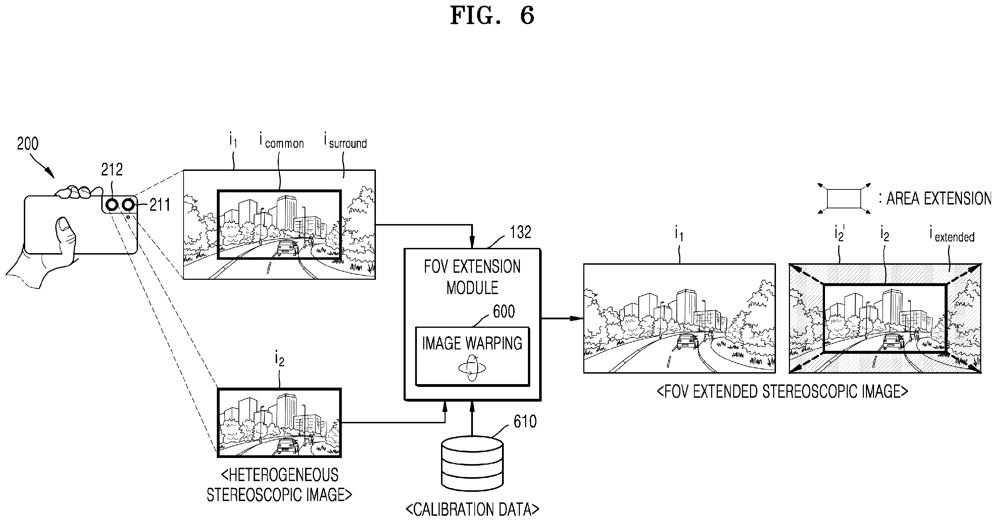

In an embodiment of the present disclosure, the processor 120 may extend the FoV of an image by performing image warping. In an embodiment of the present disclosure, the processor 120 may perform image warping on the first image and the second image based on a camera parameter of each of the first and second cameras and calibration data regarding rotation and translation between the first camera and the second camera. The processor 120 may extend the display area of the second image by performing image stitching that combines the surrounding area of the display area of the warped first image excluding the common area with the warped second image. A specific embodiment in which the processor 120 extends the FoV of the second image by image warping will be described in FIG. 6 in detail.

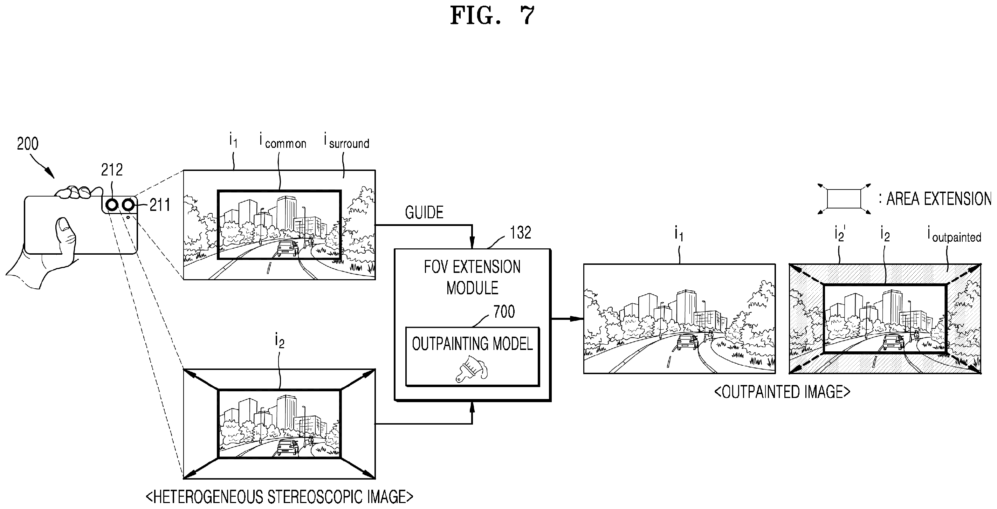

In an embodiment of the present disclosure, the processor 120 may extend the FoV of the second image by inputting the second image to an AI model and performing outpainting that uses the first image as a guide image. A specific embodiment in which the processor 120 extends the FoV of the second image by outpainting will be described in FIG. 7 in detail.

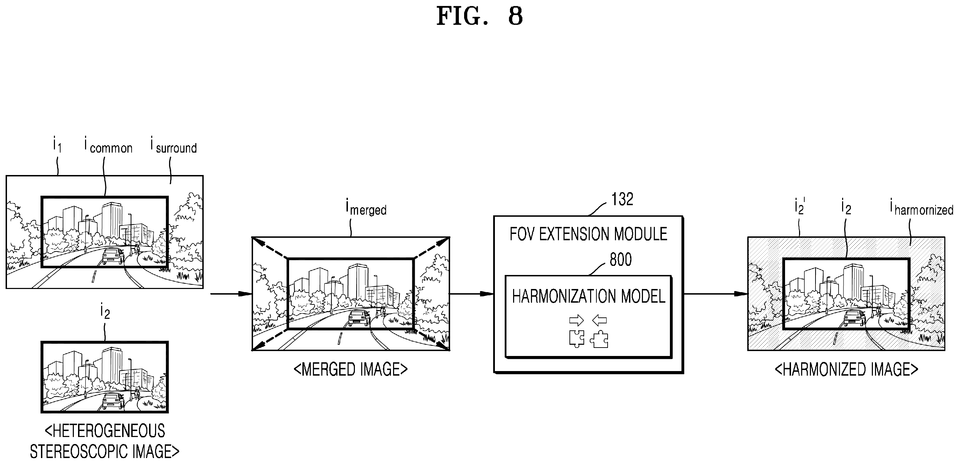

In an embodiment of the present disclosure, the processor 120 may extend the FoV of the second image by using an image harmonization algorithm. The processor 120 may obtain a merged image by merging the surrounding area of the display area of the first image excluding the common area with the second image, and extend the display area of the second image by adjusting pixel value differences of pixels corresponding to a boundary between the second image and the surrounding area in the merged image through the image harmonization algorithm. A specific embodiment in which the processor 120 extends the FoV of the second image through the image harmonization algorithm will be described in FIG. 8 in detail.

The processor 120 may obtain a second image with an extended FoV through at least one of the aforementioned methods. The processor 120 may extend the FoV of the second image by selecting one of the aforementioned methods depending on computation speed of the processor 120, requirements of the HMD device 100 and operating environments (e.g., real-time streaming, online, offline, etc.).

The spatial image generation module 134 is configured with instructions or program codes for executing a function and/or an operation of using a pair of multiple images to generate a spatial image including depth information. The spatial image generation module 134 may include an algorithm or program codes for predicting a depth value such as stereo vision, Off-Axis depth estimation or point cloud. The processor 120 may generate a spatial image including depth information by executing the instructions or program codes of the spatial image generation module 134. In an embodiment of the present disclosure, the processor 120 may estimate depth information through stereo visioning that uses a pair of the first image and the second image with the extended FoV, and obtain a spatial image including the depth information.

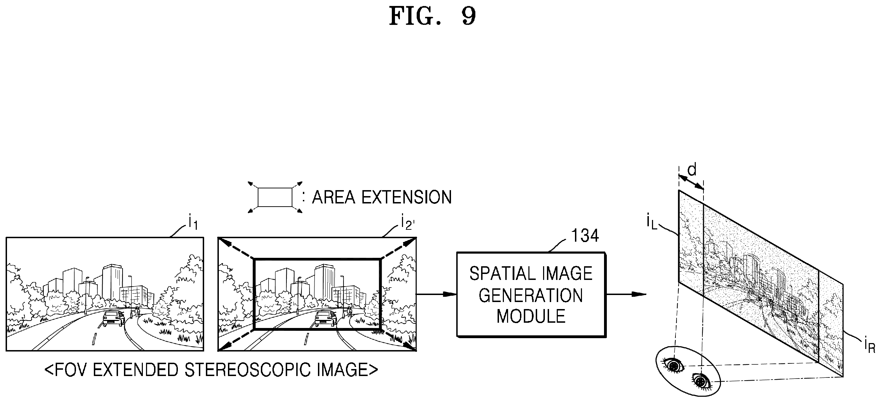

In an embodiment of the present disclosure, the processor 120 may shift the second image with the extended FoV by a disparity based on the first image, and obtain a spatial image having depth information through stereo visioning with a pair of the first image and the shifted second image. A specific embodiment in which the processor 120 obtains a spatial image including depth information by stereo visioning will be described in FIG. 9 in detail.

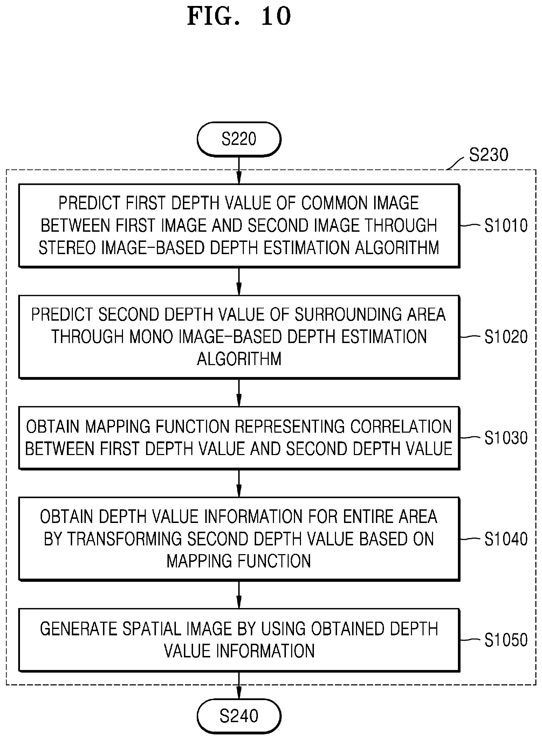

In an embodiment of the present disclosure, the processor 120 may predict a depth value of a common area between the first image and the second image through a stereoscopic image-based depth estimation algorithm, predict a depth value of an extended area of the entire display area of the second image with the extended FoV excluding the common area shared by the first image through a mono image-based depth estimation algorithm, and obtain depth value information regarding the entire area of the second image with the extended FoV by transforming the predicted depth value for the extended area based on the predicted depth value from the common area. The processor 120 may generate a spatial image by stereo visioning based on the depth value of the first image and the depth value of the second image with the extended FoV. A specific embodiment in which the processor 120 predicts depth values of a common area between the first and second images and an extended area included only in the second image and generates a spatial image based on the predicted depth values will be described in FIG. 10 in detail.

The processor 120 may generate the spatial image based on the first image and the second image with the extended FoV through not only stereo visioning but also an Off-Axis depth estimation algorithm using the Off-Axis aperture or a depth estimation algorithm using a point cloud. The processor 120 may generate the spatial image by selecting one of the aforementioned stereo visioning, Off-axis depth estimation, or point cloud depth estimation algorithm depending on computation speed of the processor 120, requirements of the HMD device 100 and operating environments (e.g., real-time streaming, online, offline, etc.).

Although not shown in FIG. 3, the HMD device 100 may further include a depth sensor. The depth sensor is configured to obtain depth information by measuring depth values of objects in real world, and may be implemented with e.g., a time-of-flight (ToF) sensor or a light wave detection and ranging (LiDAR) sensor. However, the depth sensor is not limited to the above example. The processor 120 may obtain a depth map by measuring depth values of real objects through the depth sensor, and obtain a spatial image by combining the depth map with the first image and the second image with the extended FoV.

The image storage 136 is a storage in the memory 130 that stores images. The image storage 136 may be configured with a non-volatile memory. The non-volatile memory may store and maintain information even without being powered, and use the information again when powered. The non-volatile memory may include, for example, at least one of a flash memory, a hard disk, a solid-state drive (SSD), a multimedia card micro type, a card-type memory (e.g., a secure digital (SD) or extreme digital (XD) memory), a read-only memory (ROM), a magnetic memory, a magnetic disk, or an optical disk.

Although the image storage 136 is shown in FIG. 3 as a component included in the memory 130, the present disclosure is not limited to what is shown. In an embodiment of the present disclosure, the image storage 136 may be configured as a database in the HMD device 100, which is a separate component from the memory 130.

It is not, however, limited thereto, and in an embodiment of the present disclosure, the image storage 136 may be stored in a cloud server or a web storage that is accessible through a network and performs a storage function. In this case, the HMD device 100 may be communicatively connected to the web storage or cloud server through the communication interface 110 and may perform data transmission or reception. The processor 120 may receive images having different FoVs from the web storage or cloud server.

The display 140 is a hardware device for displaying the spatial image (or spatial video) generated by the processor 120. When the HMD device 100 is implemented as a video see-through HMD, the display 140 may be configured with at least one of, for example, a liquid crystal display (LCD), a thin film transistor-liquid crystal display (TFT-LCD), organic light-emitting diodes (OLEDs), a flexible display, a three-dimensional (3D) display, or an electrophoretic display.

When the HMD device 100 is implemented as an optical see-through HMD device, the display 140 may further include an optical engine and an image combiner for projecting a virtual image. The optical engine may be configured to generate light of the virtual image, and configured as a projector including an image panel, a lighting optical system, a projection optical system, etc. When the HMD device 100 is implemented as a glasses-type AR device, the optical engine may be located on a lens frame or eye temples of the glasses-type AR device. The image combiner may be configured with, for example, a waveguide. The optical engine may display a virtual image by projecting the rendered virtual image onto the waveguide based on the spatial image (or spatial video) generated by the processor 120. This may allow the user to see the real world and the virtual image together.

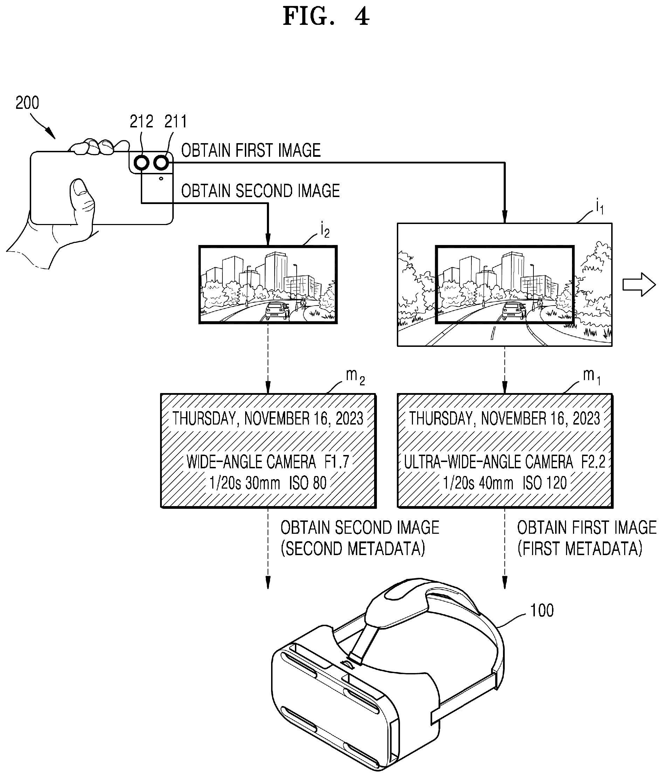

FIG. 4 illustrates an operation of the HMD device 100 for obtaining the images i₁ and i₂ and metadata m₁ and m₂ from the different types of cameras 211 and 212.

Referring to FIG. 4, the HMD device 100 may obtain the plurality of images i₁ and i₂ from an external device, e.g., the mobile device 200. The first image i₁ may be obtained by being captured by the first camera 211 included in the mobile device 200, and the second image i₂ may be obtained by being captured by the second camera 212 included in the mobile device 200. In an embodiment of the present disclosure, the first camera 211 and the second camera 212 may be of different types. For example, the first camera 211 may be an ultra-wide-angle camera including an ultra-wide-angle lens, and the second camera 212 may be a wide-angle camera including a wide-angle lens. The wide-angle camera and the ultra-wide-angle camera are described above in connection with FIGS. 1 to 3, so the redundant description will be omitted. They are not, however, limited thereto, and the first camera 211 may be the wide-angle camera and the second camera 212 may be a camera including a normal lens with a longer focal length than the wide-angle lens and a narrow FoV. For example, the second camera 212 may be implemented as a telephoto camera including a telephoto lens having a longer focal length than the wide-angle lens and a narrow FoV.

The HMD device 100 may obtain the metadata m₁ and m₂ from the images i₁ and i₂, respectively, received from the mobile device 200. The metadata is data including information about characteristics of the image, e.g., information about a type, a name or an FoV, an aperture value, a shutter speed or ISO sensitivity index of the camera that captures the image.

The HMD device 100 may obtain information about FoVs of the images i₁ and i₂ from the metadata m₁ and m₂. In the embodiment of FIG. 4, the HMD device 100 may obtain the first meta data m₁ of the first image i₁, and obtain information about the type (e.g., the ultra-wide-angle camera) and FoV (e.g., the ultra-wide-angle) of the first camera 211 that captures the first image i₁ from the first metadata m₁. Furthermore, the HMD device 100 may further obtain information about at least one of the aperture value (e.g., F2.2), the shutter speed (e.g., 1/20s) and the ISO sensitivity (e.g., ISO 120) of the first camera 211 from the first metadata m₁. The HMD device 100 may obtain information about the type (e.g., the wide-angle camera) and FoV (e.g., wide angle) of the second camera 212 that captures the second image i₂ from the second metadata m₂.

FIG. 5 illustrates an operation of the HMD device 100 for extending the FoV of an image, according to an embodiment of the present disclosure.

Referring to FIG. 5, the first image i₁ and the second image i₂ may be different types of stereoscopic images captured by different types of cameras. The first image i₁ may be captured by a camera including a lens having the first FoV, and the second image i₂ may be captured by a camera including a lens having the second FoV narrower than the first FoV. The first image i₁ may include the common area i_{common} obtained by capturing an area shared by the second image i₂ and the surrounding area i_{surround} enclosing the common area i_{common}. The second image i₂ may have a relatively narrow display area as compared to the first image i₁ and include only the common area i_{common}.

The processor 120 (see FIG. 3) of the HMD device 100 may extend the FoV of the second image i₂ by extending the display area of the second image i₂ having a relatively narrow FoV among the different types of stereoscopic images i₁ and i_{2,} by executing the instructions or program codes of the FoV extension module 132. In an embodiment of the present disclosure, the second image i₂' with an extended FoV may be obtained by performing image processing that merges, with the second image i_{2,} the surrounding area i_{surround} of the display area of the first image i₁ excluding the common area i_{common} shared by the second image i₂. The extended second image i₂' may include the common area i_{common} and an extended area i_{extended}, and the extended area i_{extended} may be equal to the surrounding area i_{surround} included in the first image i₁.

FIG. 6 illustrates an operation of the HMD device 100 for extending an FoV of an image, according to an embodiment of the present disclosure.

Referring to FIG. 6, the HMD device 100 may receive the different types of stereoscopic images i₁ and i₂ from the mobile device 200. In the embodiment of FIG. 6, the first image i₁ may be obtained by the first camera 211, which is the ultra-wide-angle camera including the ultra-wide-angle lens, and the second image i₂ may be obtained by the second camera 212, which is the wide-angle camera including a wide-angle lens. The first image i₁ may include the common area i_{common} obtained by capturing an area shared by the second image i₂ and the surrounding area i_{surround} enclosing the common area i_{common}. The second image i₂ may have a relatively narrow display area as compared to the first image i₁ and include only the common area i_{common}.

Although the different types of stereoscopic images i₁ and i₂ are shown in FIG. 6 and described as being received from the mobile device 200, the present disclosure is not limited thereto. In an embodiment of the present disclosure, the different types of stereoscopic images i₁ and i₂ may be stored, in advance, in a storage space (e.g., the image storage 136 (see FIG. 3)) of an internal memory 130 of the HMD device 100.

In an embodiment of the present disclosure, the FoV extension module 132 may include an image warping module 600. The image warping module 600 may be configured with instructions, algorithms or program codes for performing image processing to alter the positions of pixels that make up an image. In the present disclosure, the term image warping is a type of geometric transformation, and refers to image processing to alter the positions of pixels of an original image. The image warping module 600 may include a transformation function to alter the positions of pixels.

The processor 120 (see FIG. 3) of the HMD device 100 may perform image warping on the first image i₁ and the second image i₂ and extend the FoV of the second image i₂ by stitching the warped first image i₁ and second image i₂, by executing the instructions, algorithms or program codes of the image warping module 600 of the FoV extension module 132. Referring to the embodiment of FIG. 6, the processor 120 may move the positions of pixels of an image by performing image warping on the common area i_{common} shared between the first image i₁ and the second image i₂. In an embodiment of the present disclosure, the processor 120 may perform image warping on the first image i₁ and the second image i₂ based on calibration data 610 of the camera. The calibration data 610 is data about intrinsic and extrinsic characteristics of the camera, including, for example, camera parameters including at least one of the camera's focal length, principal point and image sensor format and parameters about a relative positional relationship regarding rotation and translation between cameras. The calibration data 610 about the camera characteristics may be stored in the HMD device 100 in advance. It is not, however, limited thereto, and the HMD device 100 may obtain the calibration data 610 of the cameras 211 and 212 from an external device (e.g., the mobile device 200).

The processor 120 may obtain the second image i₂' with the extended FoV by stitching the surrounding area i_{surround} of the warped first image i₁ and the second image i₂ to extend the display area of the second image i₂. In an embodiment of the present disclosure, the processor 120 may extract features from the surrounding area i_{surround} of the warped first image i₁ and the second image i₂, identify corresponding pixel pairs based on the extracted features, and perform stitching that stitches the images based on a homography transformation matrix calculated based on the identified pixel pairs. In an embodiment of the present disclosure, the processor 120 may perform blending that matches colors of the surrounding area i_{surround} and the second image i₂. Accordingly, the processor 120 may obtain the second image i₂' with the extended FoV by adding the extended area i_{extended} to the second image i₂.

FIG. 7 illustrates an operation of the HMD device 100 for extending an FoV of an image, according to an embodiment of the present disclosure.

Referring to FIG. 7, the HMD device 100 may receive the different types of stereoscopic images i₁ and i₂ from the mobile device 200. The first image i₁ and the second image i₂ in the embodiment of FIG. 7 correspond to the first image i₁ and the second image i₂ shown in FIG. 6, so the redundant description will be omitted.

Although the different types of stereoscopic images i₁ and i₂ are shown in FIG. 7 and described as being received from the mobile device 200, the present disclosure is not limited thereto. In an embodiment of the present disclosure, the different types of stereoscopic images i₁ and i₂ may be stored, in advance, in a storage space (e.g., the image storage 136 (see FIG. 3)) of an internal memory 130 of the HMD device 100.

In an embodiment of the present disclosure, the FoV extension module 132 may include an outpainting model 700. The outpainting model 700 may be configured with an AI model (or AI algorithm) trained to extend the display area by adding pixels to the periphery of an input image based on a guide image. In an embodiment of the present disclosure, the outpainting model 700 may be implemented with an end-to-end deep neural network model trained in a supervised learning method by which an image in which an area to be extended is masked by a mask is applied as input data and a non-masked image is applied as a ground truth. The deep neural network model may be implemented with, for example, a convolutional neural network (CNN) model, but is not limited thereto. The deep neural network model may be implemented with, for example, a recurrent neural network (RNN), a restricted Boltzmann machine, a deep Belief network, a bidirectional recurrent deep neural network or a deep Q-network.

The processor 120 (see FIG. 3) of the HMD device 100 may perform outpainting that uses the first image i₁ as a guide image, and accordingly, extend the FoV of the second image i₂, by executing the instructions, algorithms or program codes of the outpainting model 700 of the FoV extension module 132. Referring to the embodiment of FIG. 7, the processor 120 may input the first image i₁ and the second image i₂ to the outpainting model 700, and obtain the second image i₂' with the extended FoV by generating an outpainted area i_{outpainted} on the periphery of the second image i₂. The outpainting model 700 may generate the outpainted area i_{outpainted} on the periphery of the second image i₂ by performing inferencing that uses the input first image i₁ as a guide image.

FIG. 8 illustrates an operation of the HMD device 100 for extending an FoV of an image, according to an embodiment of the present disclosure.

Referring to FIG. 8, the HMD device 100 may receive the different types of stereoscopic images i₁ and i₂ from the mobile device 200 (see FIGS. 6 and 7). The first image i₁ and the second image i₂ in the embodiment of FIG. 8 correspond to the first image i₁ and the second image i₂ shown in FIG. 6, so the redundant description will be omitted.

Although the different types of stereoscopic images i₁ and i₂ are shown in FIG. 8 and described as being received from the mobile device 200, the present disclosure is not limited thereto. In an embodiment of the present disclosure, the different types of stereoscopic images i₁ and i₂ may be stored, in advance, in a storage space (e.g., the image storage 136 (see FIG. 3)) of an internal memory 130 of the HMD device 100.

In an embodiment of the present disclosure, the FoV extension module 132 may include a harmonization model 800. The harmonization model 800 may be configured with an AI model (or AI algorithm) trained to naturally process the boundary of an image by altering or adjusting pixel values such as color, lighting, etc., of the pixels on the boundary between the foreground and the background in combining images. In an embodiment of the present disclosure, the harmonization model 800 may be implemented with an end-to-ed deep neural network model trained in a supervised learning method by which an image in which the foreground and the background are combined is applied as input data and a natural image for which harmonization processing is finished is applied as a ground truth. The deep neural network model may be implemented with, for example, a convolutional neural network (CNN) model, but is not limited thereto. The deep neural network model may be implemented with, for example, a recurrent neural network (RNN), a restricted Boltzmann machine, a deep Belief network, a bidirectional recurrent deep neural network or a deep Q-network.

The processor 120 (see FIG. 3) of the HMD device 100 may obtain a merged image i_{merged} by merging, with the second image i_{2,} the surrounding area i_{surround} of the display area of the first image i₁ excluding the common area i_{common} shared by the second image i₂, and alter or adjust pixel value differences of pixels corresponding to the boundary between the second image i₂ and the surrounding area i_{surround} in the merged image i_{merged,} by executing the instructions, algorithms or program codes of the harmonization model 800 of the FoV extension module 132. The processor 120 may generate a harmonized area i_{harmonized} by performing inferencing through the harmonization model 800, and obtain the second image i₂' with an extended FoV by adding the harmonized area i_{harmonized} to the periphery of the second image i₂.

FIG. 9 illustrates an operation of the HMD device 100 for generating a spatial image having a depth value by using stereoscopic images i₁ and i₂', according to an embodiment of the present disclosure.

Referring to FIG. 9, the processor 120 (see FIG. 3) of the HMD device 100 may generate a spatial image including depth information by using the first image i₁ and the second image i₂' with the extended FoV, by executing the instructions or program cods of the spatial image generation module 134. In an embodiment of the present disclosure, the processor 120 may estimate depth information through stereo visioning that uses a pair of the first image i₁ and the second image i₂' with the extended FoV, and generate a spatial image including the depth information.

In the embodiment of FIG. 9, the processor 120 may perform image processing that shifts the second image i₂' with the extended FoV by a distance d corresponding to the disparity based on the first image i₁. The distance d is one between both eyes of an ordinary person, which may be, for example, 6.5 centimeters (cm). In an embodiment of the present disclosure, the processor 120 may render the first image i₁ as a left-eye image i_{L} and the second image i₂' shifted by the distance d corresponding to the disparity as a right-eye image i_{R}. The display 140 (see FIG. 3) may display the rendered left-eye image i_{L} and right-eye image i_{R} in stereo visioning.

In the embodiment of the present disclosure, the HMD device 100 may generate and display the spatial image with which the user may feel a sense of depth, by shifting the first image i₁ and the second image i₂' with the extended FoV by the distance d corresponding to the disparity and rendering them as the left-eye image i_{L} and the right-eye image i_{R}.

FIG. 10 is a flowchart illustrating a method by which the HMD device 100 generates a spatial image having a depth value by using stereoscopic images, according to an embodiment of the present disclosure.

Operations S1010 to S1050 shown in FIG. 10 are detailed operations of operation S230 of FIG. 2. Operation S1010 may be performed after operation S220 of FIG. 2 is performed. In operation S1010, the HMD device 100 predicts a first depth value of a common area between the first image and the second image through a stereo image-based depth estimation algorithm. In an embodiment of the present disclosure, the processor 120 (see FIG. 3) of the HMD device 100 may obtain depth value information based on the common area among the entire area of the first image shared by the second image and the second image through stereo visioning. It is not, however, limited thereto, and the processor 120 may obtain the depth value information based on the common area of the entire area of the first image and the second image, by using, for example, an Off-Axis depth estimation algorithm or a point cloud algorithm.

In operation S1020, the HMD device 100 predicts a second depth value of a surrounding area through a mono image-based depth estimation algorithm. In an embodiment of the present disclosure, the processor 120 of the HMD device 100 may obtain depth value information of an extended area of the display area of the second image by executing the mono image-based depth estimation algorithm.

In operation S1030, the HMD device 100 obtains a mapping function that represents a correlation between the first depth value and the second depth value. The processor 120 may obtain the mapping function by calculating a correlation between first depth value information obtained from the common area and second depth value information obtained from the extended area.

In operation S1040, the HMD device 100 obtains depth value information of the entire area by transforming the second depth value based on the mapping function.

In operation S1050, the HMD device 100 generates a spatial image by using the obtained depth value information.

Operation S1050 may be followed by operation S240 shown in FIG. 2.

In the embodiment of FIG. 10, the HMD device 100 may obtain the first depth value with high accuracy through the stereo based depth estimation algorithm for the common area between the first image obtained by the first camera having a relatively wide FoV and the second image obtained by the second camera having a narrower FoV than the first camera, obtain the second depth value through the mono image-based depth estimation algorithm for the extended area included in the second image with the extended FoV, and transform the second depth value through the mapping function that represents a correlation between the first depth value and the second depth value, thereby increasing the accuracy of the depth value of the entire area.

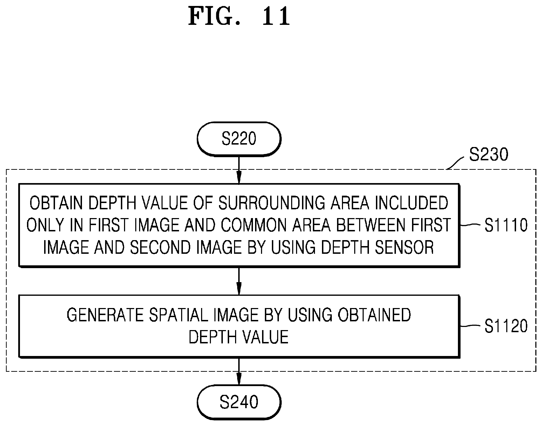

FIG. 11 is a flowchart illustrating a method by which the HMD device 100 generates a spatial image having a depth value by using stereoscopic images, according to an embodiment of the present disclosure.

Operations S1110 and S1120 shown in FIG. 11 are detailed operations of operation S230 of FIG. 2. In operation S1110, the HMD device 100 obtains depth values of the common area between the first image and the second image and the surrounding area included only in the first image by using a depth sensor. In an embodiment of the present disclosure, the HMD device 100 may further include a depth sensor for obtaining depth value information of objects in real world. The depth sensor may include, for example, a time-of-flight (ToF) sensor or a light wave detection and ranging (LiDAR) sensor, without being limited thereto. The processor 120 (see FIG. 3) of the HMD device 100 may obtain not only the depth value information of the common area shared between the first image and the second image but also the depth value information of the surrounding area included only in the first image having a relatively wide FoV by measuring a depth value of an object in real world with the depth sensor.

In operation S1120, the HMD device 100 generates a spatial image by using the obtained depth values. In an embodiment of the present disclosure, the processor 120 of the HMD device 100 may obtain a spatial image by combining the obtained depth value information with the first image and the second image with the extended FoV.

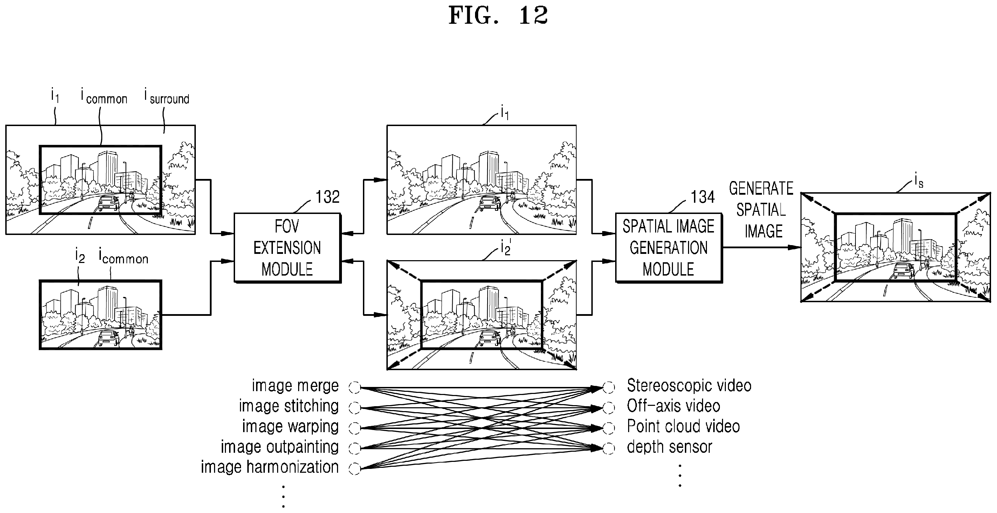

FIG. 12 illustrates operations of the HMD device 100 for extending an FOV of an image and generating a spatial image by using images having extended FOVs, according to an embodiment of the present disclosure.

Referring to FIG. 12, the HMD device 100 may extend the FoV of the second image i₂ obtained by a camera having a relatively narrow FoV among the plurality of images i₁ and i₂ captured by different types of cameras, and generate the spatial image iₛ including depth information by using the first image i₁ and the second image i₂' with the extended FoV.

The FoV extension module 132 is configured with instructions or program codes for executing a function and/or operation of extending an FoV by extending a display area of an image having a narrower FoV based on an image having a relatively wide FoV among the images having different FoVs. In an embodiment of the present disclosure, the FoV extension module 132 may extend the display area of the second image i₂ having a relatively narrow FoV by using at least one of simple image merging, image stitching, image warping, image outpainting and image harmonization. It is not, however, limited thereto, and the FoV extension module 132 may use any well-known FoV extension technique that extends the display area of an image. The aforementioned simple image merging, image stitching, image warping, image outpainting and image harmonization are described in detail in FIGS. 5 to 8, so the redundant description will be omitted.

The HMD device 100 may select one of the simple image merging, image stitching, image warping, image outpainting and image harmonization provided by the FoV extension module 132 based on system capabilities including at least one of a processing capability such as computation speed of the processor 120 (see FIG. 3), a RAM capacity and a capacity of the storage device, an environment of the operation of extending the FoV of an image (e.g., an environment of online connected to a server, an on-device environment, etc.), or a real-time processing requirement (e.g., real-time streaming). For example, the outpainting and image harmonization, methods that use an AI model such as a deep neural network model may be selected when the computation speed of the processor 120 is high or in an environment of online connected to a server. For example, when the computation speed of the processor 120 is relatively low and in the on-device environment, the simple image merging, image stitching or image warping may be selected.

The processor 120 may extend the display area of the second image i₂ by executing instructions, algorithms or program codes of a technology selected from among technologies provided by the FoV extension module 132.

The spatial image generation module 134 is configured with instructions or program codes for executing a function and/or an operation of using a pair of multiple images to generate a spatial image including depth information. The spatial image generation module 134 may include an algorithm or program codes for predicting a depth value such as stereo vision, Off-Axis depth estimation or point cloud. It is not, however, limited thereto, and the spatial image generation module 134 may include an algorithm or program codes for generating a spatial image based on a depth value obtained through a depth sensor.

The HMD device 100 may select one of the stereo visioning, Off-axis depth estimation, point cloud or using of the depth sensor provided by the spatial image generation module 134 based on system capabilities including at least one of a processing capability such as computation speed of the processor 120, a RAM capacity and a capacity of the storage device, an environment of the operation of extending the FoV of an image (e.g., an environment of online connected to a server, an on-device environment, etc.), or a real-time processing requirement (e.g., real-time streaming). For example, when the computation speed of the processor 120 is lower than a reference capability and in the on-device environment, the stereo visioning may be selected. The processor 120 may generate the spatial image iₛ by executing instructions, algorithms or program codes of a technology provided by the spatial image generation module 134.

In the embodiment of FIG. 12, the HMD device 100 may combine those selected from among the technologies provided by the FoV extension module 132 and the spatial image generation module 134 depending on the processing capability such as the computation speed of the processor 120, the operating environment (e.g., online, on-device environments, etc.) or real-time processing requirements, extend the FoV of the second image i₂ by using the combined technologies, and generate the spatial image iₛ based on the first image i₁ and the second image i₂' with the extended FoV.

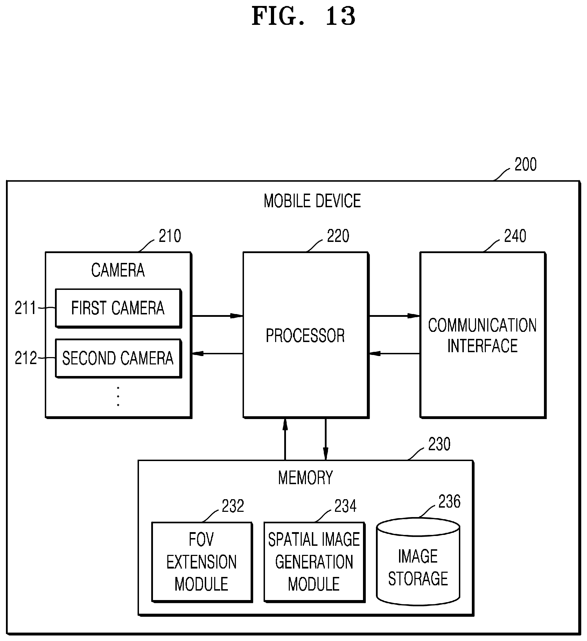

FIG. 13 is a block diagram illustrating components of the mobile device 200 according to an embodiment of the disclosure.

In an embodiment of the present disclosure, the mobile device 200 may be a smart phone. It is not, however, limited thereto, and the mobile device 200 may be one of, for example, a tablet PC, a laptop computer, an e-book reader, a digital broadcasting terminal, a personal digital assistant (PDA), a portable multimedia player (PMP), a navigation system, a MP3 player or a camcorder.

Referring to the FIG. 13, the mobile device 200 may include a camera 210, a processor 220, a memory 230 and a communication interface 240. The camera 210, the processor 220, the memory 230 and the communication interface 240 may each be electrically and/or physically connected to one another. Only some components for describing an operation of the mobile device 200 are shown in FIG.3, but components included in the mobile device 200 are not limited to those shown in FIG. 13. In an embodiment of the present disclosure, the mobile device 200 may further include a display configured with a touch screen. In an embodiment of the present disclosure, the mobile device 200 may further include a battery for suppling driving power to the camera 210, the processor 220, the memory 230, the communication interface 240 and the display.

The camera 210 is configured to obtain an image about a real space and an object in the real space by photographing the object in real world. In an embodiment of the present disclosure, the camera 210 may be implemented as an RGB camera. It is not, however, limited thereto, and in an embodiment of the present disclosure, the camera 210 may be implemented as any well-known type of camera such as an RGB-depth camera, a dynamic vision sensor camera, a stereo fish-eye camera, a gray-scale camera or an infrared camera including a depth estimation function.

The camera 210 may include a lens module, an image sensor and an image processing module. The camera 210 may obtain a still image or a video about an object through the image sensor (e.g., CMOS or CCD). The image processing module may encode a still image having a single image frame or video data comprised of a plurality of image frames obtained through the image sensor and send it to the processor 220.

The camera 210 may be provided in the plural. In the embodiment of FIG. 13, the camera 210 may include two cameras: the first camera 211 and the second camera 212. It is not, however, limited thereto, and the camera 210 may include three or more cameras.

The first camera 211 and the second camera 212 may be of different types. For example, the first camera 211 may be an ultra-wide-angle camera including an ultra-wide-angle lens, and the second camera 212 may be a wide-angle camera including a wide-angle lens. The wide-angle camera and the ultra-wide-angle camera are described in detail above in connection with FIGS. 1 to 3, so the redundant description will be omitted. When the first camera 211 is configured with the ultra-wide-angle camera, the first camera 211 may include a fish-eye lens. They are not, however, limited thereto, and the first camera 211 may be the wide-angle camera and the second camera 212 may be a camera including a normal lens with a longer focal length than the wide-angle lens and a narrow FoV.

As the first camera 211 includes a lens having a relatively wide FoV as compared to the second camera 212, it may obtain the first image with a wide FoV by capturing more areas than those of the second camera 212. The second image captured by the second camera 212 may include a relatively narrow area as compared to the first image.

The processor 220 may execute one or more instructions of a program stored in the memory 230. The processor 220 may include hardware components for performing arithmetic, logical, and input/output operations and image processing. The processor 220 is shown as one element in FIG. 13, but is not limited thereto. In an embodiment of the present disclosure, the processor 220 may be configured with one or more elements. The processor 220 may be a universal processor such as a central processing unit (CPU), an application processor (AP), a digital signal processor (DSP), etc., a dedicated graphic processor such as a graphic processing unit (GPU), a vision processing unit (VPU), etc., or a dedicated artificial intelligence (AI) processor such as a neural processing unit (NPU). The processor 220 may control processing of input data according to a predefined operation rule or an AI model. When the processor 220 is the dedicated AI processor, the dedicated AI processor may be designed in a hardware structure specialized for dealing with a particular AI model.

The memory 230 may include, for example, at least one type of storage media including a flash memory, a hard disk, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), or an optical disk.

The memory 230 may store instructions related to functions and/or operations of the HMD device 200 for generating a spatial video by performing image processing on the plurality of images having different FoVs. In an embodiment of the disclosure, the memory 230 may store at least one of algorithms, data structures, program codes, application programs, and instructions that are readable to the processor 220. The instructions, algorithms, data structures and program codes stored in the memory 230 may be implemented in e.g., a programming or scripting language such as C, C++, Java, assembler, etc.

The memory 230 may store instructions, algorithms, data structures or program codes regarding an FoV extension module 232 and a spatial image generation module 234. The modules included in the memory 230 may refer to units of processing the functions or operations performed by the processor 220, and may be implemented in software such as instructions, algorithms, data structures or program codes. In an embodiment of the present disclosure, the memory 230 may include an image storage 236 for storing images.

The processor 220 may be implemented by executing the instructions or program codes stored in the memory 230. Functions and/or operations performed when the processor 220 executes the instructions or program codes of each of the modules stored in the memory 230 will now be described in detail.

The processor 220 may obtain image data of the plurality of images having different FoVs through the camera 210. The plurality of images are captured by the different types of cameras 211 and 212 having different FoVs and may have different display areas. For example, the first image may be obtained by being captured by the first camera 211, an ultra-wide-angle camera including an ultra-wide-angle lens, and the second image may be obtained by the second camera 212, a wide-angle camera including a wide-angle lens. However, it is not limited thereto, and the first image may be obtained by being captured by the first camera 211, a wide-angle camera and the second image may be obtained by being captured by the second camera 212, a telephoto camera. For example, the first image may be obtained by being captured by the first camera 211, an ultra-wide-angle camera, and the second image may be obtained by being captured by the second camera 212, a telephoto camera.

The processor 220 may obtain information about the FoV of each of the plurality of images through metadata of the plurality of images.

It is not, however, limited thereto, and the processor 220 may obtain the plurality of images stored in the image storage 236 by loading the program or instructions stored in the memory 230.

The FoV extension module 232 is configured with instructions or program codes for executing a function and/or operation of extending an FoV by extending a display area of an image having a narrower FoV based on an image having a relatively wide FoV among the images having different FoVs. The FoV extension module 232 is configured with instructions or program codes for executing the same function and/or operation as the FoV extension module 132 (see FIG. 3) of FIG. 3, so the redundant description will be omitted. The processor 220 may extend a narrow FoV of the second image based on the display area of the first image having a relatively wide FoV by executing the instructions or program codes of the FoV extension module 232. A specific method for the processor 220 for extending the FoV is the same as the methods for the processor 120 (see FIG. 3) for extending the FoV as described in FIG. 3, so the redundant description will be omitted.

The spatial image generation module 234 is configured with instructions or program codes for executing a function and/or an operation of using a pair of multiple images to generate a spatial image including depth information. The spatial image generation module 234 is configured with instructions or program codes for executing the same function and/or operation as the spatial image generation module 134 (see FIG. 3) of FIG. 3, so the redundant description will be omitted. The processor 220 may generate a spatial image including depth information by executing the instructions or program codes of the spatial image generation module 234. A specific method for the processor 220 for generating the spatial image is the same as the methods for the processor 120 (see FIG. 3) for generating the spatial image as described in FIG. 3, so the redundant description will be omitted.

The processor 220 may transmit the generated spatial image to the HMD device 100 (see IG. 14) through the communication interface 240. The communication interface 240 is a hardware device configured to perform data communication with an external device and/or a server. The communication interface 240 may be configured with a device for performing data communication with an external device or a server by using at least one of data communication schemes including, for example, a cable local area network (LAN), a wireless LAN, Wi-Fi, Wi-Fi direct, Bluetooth, Bluetooth low energy (BLE), infrared data association (IrDA), near field communication (NFC), wireless broadband Internet (Wibro), world interoperability for microwave access (WiMAX), shared wireless access protocol (SWAP), wireless gigabit alliance (WiGig) and radio frequency (RF) communication. On the part of the mobile device 200, the external device may be the HMD device 100.

In an embodiment of the present disclosure, the communication interface 240 may be connected to the HMD device 100 and may transmit data (e.g., image data of the spatial image) under the control of the processor 220. The communication interface 240 may be paired with the HMD device 100 over a short-range wireless communication network, e.g., Bluetooth, BLE or Wi-Fi direct, to transmit the image data of the spatial image to the HMD device 100.

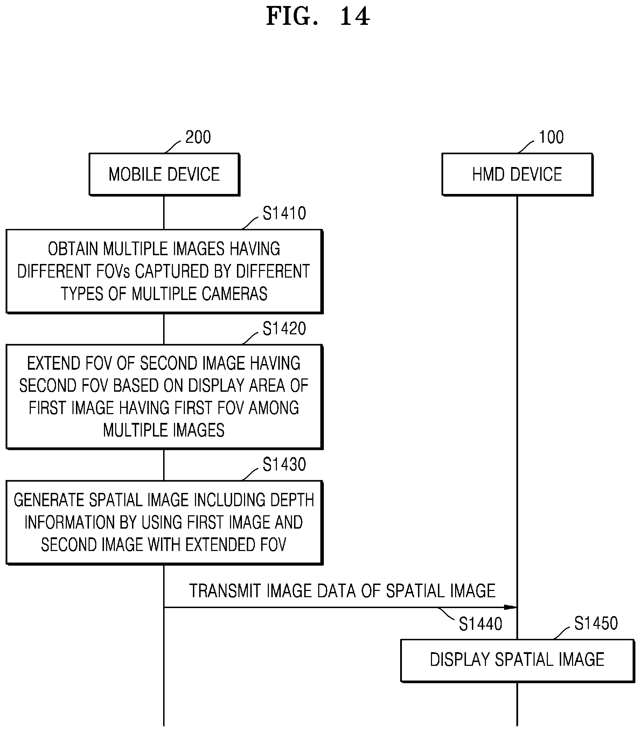

FIG. 14 is a flowchart illustrating operations of the mobile device 200 and the HMD device 100, according to an embodiment of the present disclosure.

In operation S1410, the mobile device 200 obtains a plurality of images having different FoVs captured by a plurality of cameras of different types.

In operation S1420, the mobile device 200 extends, based on a display area of a first image having a first FoV among the plurality of images, a second FoV of a second image.

In operation S1430, the mobile device 200 generates a spatial image including depth information by using the first image and the second image with the extended FoV.

Operations S1410 to S1430 are the same as operations S210 to S230 shown in FIG. 2 except that the entity of performing the operations is the mobile device 200, so the redundant description will be omitted.

In operation S1440, the mobile device 200 transmits image data of the spatial image to the HMD device 100. In an embodiment of the present disclosure, the mobile device 200 may be paired with the HMD device 100 over a short-range wireless communication network, e.g., Bluetooth, BLE or Wi-Fi direct, and may transmit the image data of the spatial image to the HMD device 100.

In operation S1450, the HMD device 100 displays the spatial image. In an embodiment of the present disclosure, the HMD device 100 may receive the image data of the plurality of spatial images obtained successively over time from the mobile device 200, and display a spatial video comprised of a plurality of spatial images.

In the embodiments of FIGS. 13 and 14, the spatial image may be generated by the mobile device 200, and the generated spatial image (or spatial video) may be displayed by the HMD device 100. In an embodiment of the present disclosure, the HMD device 100 may receive and display the spatial image (or spatial video) generated by the mobile device 200 when the processing capability such as the computation speed of the processor 120 (see FIG. 3) is low and the storage capacity of the memory 130 (see FIG. 3) is low, thereby providing a high quality spatial image (or spatial video) in real time without a delay and thus, increasing the user's immersiveness.

An aspect of the present disclosure provides the head-mounted display (HMD) device 100 for processing images obtained from different types of cameras. In an embodiment of the present disclosure, the HMD device 100 may include memory 130 storing at least one instruction, at least one processor 120 configured to execute the at least one instruction, and a display 140. The at least one processor 120 may execute the at least one instruction to cause the HMD device 100 to obtain a plurality of images having different FoVs captured by a plurality of cameras of different types. The at least one processor 120 may execute the at least one instruction to cause the HMD device 100 to extend, based on a display area of a first image having a first FOV among the plurality of images, an FoV of a second image by extending a display area of the second image having a second FOV smaller than the first FOV. The at least one processor 120 may execute the at least one instruction to cause the HMD device 100 to generate a spatial image including depth information by using the first image and the second image with the extended FoV. The at least one processor 120 may execute the at least one instruction to cause the HMD device 100 to display the spatial image through the display 140.

In an embodiment of the present disclosure, the at least one processor 120 may execute the at least one instruction to cause the HMD device 100 to obtain information about an FoV of each of the plurality of images from metadata of the plurality of images.

In an embodiment of the present disclosure, the at least one processor 120 may execute the at least one instruction to cause the HMD device 100 to extend the display area of the second image by merging, with the second image, a surrounding area of the display area of the first image excluding a common area shared by the second image.

In an embodiment of the present disclosure, the at least one processor 120 may execute the at least one instruction to cause the HMD device 100 to extend the display area of the second image by performing image stitching which combines, with the second image, the surrounding area of the display area of the first image excluding the common area shared by the second image.

In an embodiment of the present disclosure, the at least one processor 120 may execute that at least one instruction to cause the HMD device 100 to perform image warping for the first image and the second image based on camera parameters including at least one of focal lengths of the first camera for obtaining the first image and the second camera for obtaining the second image, principal points and an image sensor format, and calibration data including relative positional relationships of rotation and translation between the first camera and the second camera.

In an embodiment of the present disclosure, the at least one processor 120 may execute the at least one instruction to cause the HMD device 100 to extend the display area of the second image by performing outpainting which inputs the second image to an AI model and uses the first image as a guide image.

In an embodiment of the present disclosure, the at least one processor 120 may execute the at least one instruction to cause the HMD device 100 to obtain a merged image by merging, with the second image, a surrounding area of the display area of the first image excluding a common area shared by the second image and adjust pixel value differences of pixels corresponding to a boundary between the second image and the surrounding area in the merged image by using an image harmonization algorithm.

In an embodiment of the present disclosure, the at least one processor 120 may execute the at least one instruction to cause the HMD device 100 to obtain a stereoscopic image which provides depth information by shifting the second image with the extended FoV by a disparity based on the first image.

In an embodiment of the present disclosure, the at least one processor 120 may execute the at least one instruction to cause the HMD device 100 to predict a first depth value of the common area shared between the display area of the first image and the display area of the second image through a stereo image-based depth estimation algorithm, and predict a second depth value of an extended area of the entire display area of the second image with the extended FoV excluding the common area through a mono image-based depth estimation algorithm. The at least one processor 120 may execute the at least one instruction to cause the HMD device 100 to obtain a mapping function representing a correlation between the first depth value predicted from the common area and the second depth value predicted from the extended area, and obtain depth value information of an entire area including the common area and the surrounding area by transforming the second depth value based on the mapping function. The at least one processor 120 may execute the at least one instruction to cause the HMD device 100 to generate a spatial image by using the obtained depth value information.

In an embodiment of the present disclosure, the HMD device 100 may further include a depth sensor configured to obtain depth value information of an object. The at least one processor 120 may execute the at least one instruction to cause the HMD device 100 to obtain depth value information of objects located in a surrounding area included only in the first image and a common area shared between the first image and the second image by using the depth sensor. The at least one processor 120 may execute the at least one instruction to cause the HMD device 100 to generate a spatial image by using the obtained depth value information.

Another aspect of the present disclosure provides an operating method of the HMD device 100. In an embodiment of the present disclosure, the operating method of the HMD device 100 may include obtaining a plurality of images having different FOVs captured by different types of multiple cameras (S210). In an embodiment of the present disclosure, the operating method of the HMD device 100 may include extending, based on a display area of a first image having a first FOV among the plurality of images, an FoV of a second image by extending a display area of the second image having a second FOV smaller than the first FOV (S220). In an embodiment of the present disclosure, the operating method of the HMD device 100 may include generating a spatial image including depth information by using the first image and the second image with the extended FOV (S230). In an embodiment of the present disclosure, the operating method of the HMD device 100 may include displaying the generated spatial image (S240).

In an embodiment of the preset disclosure, the operating method of the HMD device 100 may further include obtaining information about an FoV of each of the plurality of images from metadata of the plurality of images.

In an embodiment of the present disclosure, in extending the FoV of the second image (S220), the HMD device 100 may extend the display area of the second image by merging, with the second image, a surrounding area of the display area of the first image excluding a common area shared by the second image.

In an embodiment of the present disclosure, in extending the FoV of the second image (S220), the HMD device 100 may extend the display area of the second image by performing image stitching which combines, with the second image, the surrounding area of the display area of the first image excluding the common area shared by the second image.

In an embodiment of the present disclosure, the extending of the FoV of the second image (S220) may further include performing image warping for the first image and the second image based on camera parameters including at least one of focal lengths of the first camera for obtaining the first image and the second camera for obtaining the second image, principal points and an image sensor format, and calibration data including relative positional relationships of rotation and translation between the first camera and the second camera.

In an embodiment of the present disclosure, in extending the FoV of the second image (S220), the HMD device 100 may extend the display area of the second image by performing outpainting which inputs the second image to an AI model and uses the first image as a guide image.

In an embodiment of the present disclosure, the extending of the FoV of the second image (S220) may include obtaining a merged image by merging, with the second image, a surrounding area of the display area of the first image excluding a common area shared by the second image; and adjusting pixel value differences of pixels corresponding to a boundary between the second image and the surrounding area in the merged image by using an image harmonization algorithm.

In an embodiment of the present disclosure, in generating the spatial image (S230), the HMD device 100 may obtain a stereoscopic image which provides depth information by shifting the second image with the extended FoV by a disparity based on the first image.

In an embodiment of the present disclosure, the generating of the spatial image (S230) may include predicting a first depth value of the common area shared between the display area of the first image and the display area of the second image through a stereo image-based depth estimation algorithm (S1010); and predicting a second depth value of an extended area of the entire display area of the second image with the extended FoV excluding the common area through a mono image-based depth estimation algorithm (S1020). The generating of the spatial image (S230) may include obtaining a mapping function representing a correlation between the first depth value predicted from the common area and the second depth value predicted from the extended area (S1030). The generating of the spatial image (S230) may include obtaining depth value information for an entire area including the common area and the surrounding area by transforming the second depth value based on the mapping function (S1040). The generating of the spatial image (S230) may include generating the spatial image by using the obtained depth value information (S1050).

Another aspect of the present disclosure provides the mobile device 200 for processing images obtained from different types of cameras. In an embodiment of the present disclosure, the mobile device 200 may include the plurality of cameras 211 and 212 configured to obtain images having different FOVs, the memory 230 storing at least one instruction, the at least one processor 220 configured to execute the at least one instruction, and the communication interface 240 configured to pair with an external device to transmit and receive data. The at least one processor 220 may execute the at least one instruction to cause the mobile device 200 to obtain a first image through the first camera 211 having a first FoV and obtain a second image through the second camera 212 having a second FoV smaller than the first FoV among the plurality of cameras 211 and 212. The at least one processor 220 may execute the at least one instruction to cause the mobile device 200 to extend the FoV of the second image by extending the display area of the second image based on the display area of the first image. The at least one processor 220 may execute the at least one instruction to cause the mobile device 200 to generate a spatial image including depth information by using the first image and the second image with the extended FoV. The at least one processor 220 may execute the at least one instruction to cause the mobile device 200 to transmit the spatial image to the paired HMD device 100 through the communication interface 240. The spatial image may be displayed by the HMD device 100.

A program executed by the HMD device 100 as described in the present disclosure may be implemented in hardware elements, software elements, and/or a combination thereof. The program may be performed by any system capable of performing computer-readable instructions.

The software may include a computer program, codes, instructions, or one or more combinations of them, and may configure a processing device to operate as desired or instruct the processing device independently or collectively.

The software may be implemented with a computer program including instructions stored in a computer-readable recording (or storage) medium. Examples of the computer-readable recording medium include a magnetic storage medium (e.g., a read only memory (ROM), a floppy disk, a hard disk, etc.), and an optical recording medium (e.g., a compact disc ROM (CD-ROM), or a digital versatile disc (DVD)). The computer-readable recording medium may also be distributed over network-coupled computer systems so that the computer-readable codes may be stored and executed in a distributed fashion. The media may be read by the computer, stored in the memory, and executed by the processor.

The computer-readable storage medium may be provided in the form of a non-transitory storage medium. The term 'non-transitory' just means that the storage medium is tangible without including a signal, but does not help distinguish any data stored semi-permanently or temporarily in the storage medium. For example, the non-transitory storage medium may include a buffer that temporarily stores data.

Furthermore, the program according to the embodiments of the disclosure may be provided in a computer program product. The computer program product may be a commercial product that may be traded between a seller and a buyer.

The computer program product may include a software program and a computer-readable storage medium having the software program stored thereon. For example, the computer program product may include a product (e.g., a downloadable application) in the form of a software program that is electronically distributed by the manufacturer of the HMD device or by an electronic market (e.g., Samsung Galaxy store^{®}). For the electronic distribution, at least a portion of the software program may be stored in a storage medium or arbitrarily generated. In this case, the storage medium may be one of a server of the manufacturer of the HMD device 100 or of a relay server that temporarily stores the software program.

The computer program product may include a storage medium of a server or a storage medium of the HMD device 100 in a system including the HMD device 100 and/or the server. Alternatively, when there is a third device (e.g., the mobile device 200 (see FIGS. 13 and 14) such as a smart phone) communicatively connected to the HMD device 100, the computer program product may include a storage medium of the third device. In another example, the computer program product may be transmitted from the HMD device 100 to the third device, or may include a software program itself that is transmitted from the third device to the electronic device.

In this case, one of the HMD device 100 or the third device may perform the method according to the embodiments of the disclosure, by executing the computer program product. Alternatively, at least one of the HMD device 100 and the third device may perform the method according to the embodiments of the disclosure in a distributed fashion, by executing the computer program product.

For example, the HMD device 100 may control another electronic device (e.g., the mobile device such as a smart phone) communicatively connected to the HMD device 100 to perform the method according to the embodiments of the disclosure, by executing the computer program product stored in the memory 130 (see FIG. 3).

In another example, the third device may control the electronic device communicatively connected to the third device to perform the method according to the embodiments of the disclosure, by executing the computer program product.

In the case that the third device executes the computer program product, the third device may download the computer program product from the HMD device 100 and execute the downloaded computer program product. Alternatively, the third device may perform the method according to the embodiments of the disclosure by executing the computer program product that is preloaded.

Although the disclosure is described with reference to some embodiments as described above and accompanying drawings, it will be apparent to those of ordinary skill in the art that various modifications and changes can be made to the embodiments. For example, the aforementioned method may be performed in a different order, and/or the aforementioned components such as a computer system or a module may be combined in a different form from what is described above, and/or replaced or substituted by other components or equivalents thereof, to obtain appropriate results.

## Claims

1. A head-mounted display (HMD) device (100) for processing images obtained from different types of cameras, the HMD device comprising:
memory (130) storing at least one instruction;
at least one processor (120) configured to execute the at least one instruction; and
a display (140),
wherein the at least one processor (120) executes the at least one instruction to cause the HMD device (100) to:
obtain a plurality of images having different fields of view (FOVs) captured by a plurality of cameras of different types,
extend, based on a display area of a first image having a first FOV among the plurality of images, an FOV of a second image by extending a display area of the second image having a second FOV smaller than the first FOV,
generate a spatial image including depth information by using the first image and the second image with the extended FOV, and
display the spatial image through the display.

2. The HMD device (100) of claim 1, wherein the at least one processor (120) executes the at least one instruction to cause the HMD device (100) to extend the display area of the second image by merging, with the second image, a surrounding area of the display area of the first image excluding a common area shared by the second image.

3. The HMD device (100) of claim 1, wherein the at least one processor (120) executes the at least one instruction to cause the HMD device (100) to extend the display area of the second image by performing image stitching which combines, with the second image, a surrounding area of the display area of the first image excluding a common area shared by the second image.

4. The HMD device (100) of claim 1, wherein the at least one processor (120) executes the at least one instruction to cause the HMD device (100) to extend the display area of the second image by performing outpainting that inputs the second image to an artificial intelligence (AI) model and uses the first image as a guide image.

5. The HMD device (100) of claim 1, wherein the at least one processor (120) executes the at least one instruction to cause the HMD device (100) to:
obtain a merged image by merging, with the second image, a surrounding area of the display area of the first image excluding a common area shared by the second image, and
adjust pixel value differences of pixels corresponding to a boundary between the second image and the surrounding area in the merged image by using an image harmonization algorithm.

6. The HMD device (100) of any one of claims 1 to 5, wherein the at least one processor (120) executes the at least one instruction to cause the HMD device (100) to obtain a stereoscopic image which provides depth information by shifting the second image with the extended FOV by a disparity based on the first image.

7. The HMD device (100) of any one of claims 1 to 5, wherein the at least one processor (120) executes the at least one instruction to cause the HMD device (100) to:
predict a first depth value of a common area shared between the display area of the first image and the display area of the second image, through a stereo image-based depth estimation algorithm,
predict a second depth value of an extended area of an entire display area of the second image with the extended FOV excluding the common area, through a mono image-based depth estimation algorithm,
obtain a mapping function representing a correlation between the first depth value predicted from the common area and the second depth value predicted from the extended area,
obtain depth value information of an entire area including the common area and the surrounding area by transforming the second depth value based on the mapping function, and
generate the spatial image by using the obtained depth value information.

8. The HMD device (100) of any one of claims 1 to 5, further comprising:
a depth sensor configured to obtain depth value information of an object,
wherein the at least one processor (120) executes the at least one instruction to cause the HMD device (100) to:
obtain, by using the depth sensor, depth value information of objects located in a surrounding area included only in the first image and the common area shared between the first image and the second image, and
generate the spatial image by using the obtained depth value information.

9. An operating method of a head-mounted display (HMD) device (100), the method comprising:
obtaining a plurality of images having different fields of view (FOVs) captured by a plurality of cameras of different types (S210);
extending, based on a display area of a first image having a first FOV among the plurality of images, an FOV of a second image by extending a display area of the second image having a second FOV smaller than the first FOV (S220);
generating a spatial image including depth information by using the first image and the second image with the extended FOV; and
displaying the generated spatial image (S240).

10. The method of claim 9, wherein the extending of the FOV of the second image (S220) comprises extending the display area of the second image by merging, with the second image, a surrounding area of the display area of the first image excluding a common area shared by the second image.

11. The method of claim 9, wherein the extending of the FOV of the second image (S220) comprises extending the display area of the second image by performing image stitching which combines, with the second image, a surrounding area of the display area of the first image excluding a common area shared by the second image.

12. The method of claim 9, wherein the extending of the FOV of the second image (S220) comprises extending the display area of the second image by performing outpainting which inputs the second image to an artificial intelligence (AI) model and uses the first image as a guide image.

13. The method of claim 9, wherein the extending of the FOV of the second image (S220) comprises
obtaining a merged image by merging, with the second image, a surrounding area of the display area of the first image excluding a common area shared by the second image; and
adjusting pixel value differences of pixels corresponding to a boundary between the second image and the surrounding area in the merged image by using an image harmonization algorithm.

14. The method of any one of claims 9 to 13, wherein the generating of the spatial image (S230) comprises obtaining a stereoscopic image which provides depth information by shifting the second image with the extended FOV by a disparity based on the first image.

15. The method of any one of claims 9 to 13, wherein the generating of the spatial image (S230) comprises
predicting a first depth value of a common area shared between the display area of the first image and the display area of the second image, through a stereo image-based depth estimation algorithm (S1010);
predicting a second depth value of an extended area of an entire display area of the second image with the extended FOV excluding the common area, through a mono image-based depth estimation algorithm (S1020);
obtaining a mapping function representing a correlation between the first depth value predicted from the common area and the second depth value predicted from the extended area (S1030);
obtaining depth value information of an entire area including the common area and the surrounding area by transforming the second depth value based on the mapping function (S1040); and
generating the spatial image by using the obtained depth value information (S1050).
